# EUROPEAN PATENT APPLICATION

(11) **EP 4 276 084 A1**
(43) Date of publication of application: **15.11.2023**
(21) Application number: 22305696.1
(22) Date of filing: 10.05.2022
(51) Int. Cl.: C04B 28/08, C04B 28/10, C04B 111/60

(54) **HYDRAULIC BINDER COMPOSITIONS COMPRISING STEEL MAKING SLAG, A CO-BINDER AND AN ALKALI MINERAL SALT**

(71) Applicant: Ecocem Materials Limited, Dublin 3 D03E0C0 (IE); Ecole Normale Supérieure Paris-Saclay, 91190 Gif-sur-Yvette (FR); CENTRE NATIONAL DE LA RECHERCHE SCIENTIFIQUE (CNRS), 75016 Paris (FR); Université Paul Sabatier Toulouse III, 31400 Toulouse (FR); Institut National des Sciences Appliquées de Toulouse, 31077 Toulouse Cedex 4 (FR)
(72) Inventor: FROUIN, Laurent, 75012 PARIS (FR); ALFANI, Roberta, 75012 PARIS (FR); GUTSALENKO, Tanya, 75012 PARIS (FR); WATTEZ, Thomas, 75012 PARIS (FR); CHAOUCHE, Mohend, 91190 GIF SUR YVETTE (FR); CYR, Martin, 31077 TOULOUSE CEDEX 4 (FR)
(74) Representative: Plasseraud IP

(57) **Abstract**

The invention concerns a hydraulic binder composition comprising:
A) a mixture of:
A-1) between 20 dry wt% and 95 dry wt % of at least one steel making slag,
A-2) between 4 dry wt % and 79 dry wt % of at least a slag different from A-1, and/or at least one pozzolanic material and/or at least one inert filler,
A-3) between 1 dry wt % and 25 dry wt % of at least one co-binder, preferably a clinker source and/or a lime source different from A-1 and A-2,

B) between 0.01 dry wt % and 10 dry wt %, relative to the total dry weight of A, of at least one steel making slag accelerator,
C) between 0.1 dry wt% and 5 dry wt%, relative to the total dry weight of A, of at least one alkali activator for reacting A-1, A-2 and/or A-3 with water, C being different from B and chosen among alkali mineral salts and mixtures thereof,
D) between 0.1 dry wt% and 2 dry wt%, relative to the total dry weight of A, of at least one fluidification agent.

## Description

### Technical Field

This disclosure pertains to the field of binder composition for preparing concrete or industrial mortars. More specifically, the technical field of the invention relates to hydraulic mineral binders including at least one steel making slag, which are used in compositions able to set and harden, such as mortar or concrete compositions.

More particularly, the invention relates to a hydraulic binder compositions and compositions able to set and harden for the building industry, which include at least one steel making slag, at least another slag different from the steel making slag and a co-binder.

The invention also concerns the methods of preparation of these slag-based binders, of these compositions able to set and harden.

The building applications made of the set and hardened products obtained from these compositions are also in the field of the invention.

### Background Art

Portland cement production has a strong and negative impact on the environment due to the emissions of large quantities of carbon dioxide. The production of cement inherently generates CO₂ during the calcination of the raw materials at very high temperature (1450°C) in a kiln through decarbonation of the limestone (Eq. (1)):

CaCO₃ (s) → CaO (s) + CO₂ (g) (Eq. (1))

In addition, carbon dioxide is released as a result of the combustion of the fossil fuels needed to heat the cement kiln. By adding the additional emissions of grinding, almost one ton of CO₂ per ton of Portland cement is obtained. Overall, the cement industry is responsible for about 7 to 9% of the global carbon dioxide emissions.

Moreover, handling Portland cement may lead to health issues (such as allergy) due in particular to its high alkalinity (pH higher than 13). In addition, hazardous elements as hexavalent Chromium (Cr (VI)) may be released upon kneading, which is also unhealthy for the workers when it gets in contact with the skin. Although Cr (VI) reducing agents (as ferrous sulfate) are normally included in the cement powder, their efficiency is limited in time. Building workers, in particular those in the third world, are not expected to often check the deadline related to such treatments.

Most current research on new binders aims to replace cement in various applications by binders with lower environmental impact. One route is through using resources without their expensive treatment, such as by-products from other industries (waste for one industry, but primary resource for others). This is the case of blast-furnace slag which is a by-product of iron industry. By grinding this product into fine powder (GGBS) one can obtain a cementitious material that can be used in partial substitution of cement or used alone by adding some chemical activators.

This is also the case of converter slag like steel making slag, for instance Basic Oxygen Furnace slag (BOF). BOF slag is generated during the steel making process when raw iron is oxidized in the converter by oxygen to reduce the carbon content of the raw iron. The use of converter slag as a replacement of cement is, however, limited due to its relatively high content of free lime (CaO). Free lime may react with water to form calcium hydroxide which crystallizes in a cement-base building material upon hardening. This process leads to high crystallization pressure inside the hardened material and subsequently to significant volume expansion or swelling. Nevertheless, several attempts have been made to utilize converter slag in cement-based building materials.

For instance, WO 2020/188070 (Tata Steel) discloses a steel making slag mixture with a chelating agent chosen from polycarboxylic acids, most preferably citrates, to act both as an activating agent and a superplasticizer.

JP 2000169212 (Nippon Kokan) teaches chelating agents selected from triethanolamine, triisopropanolamine, or phenol can act as activating agents for steel making slags.

WO 2021/197866 (Sika Technology AG) discloses a method for controlling the volume expansion of a hydraulically setting composition comprising steel making slag, said method including a step of adding a silica source to said composition.

However, the compressive strength, of hardened products obtained from compositions comprising steel-making slag of the prior art, at long term, typically at 28 days could be widely improved.

In this context, the invention aims at addressing at least one of the above problems and/or needs, through fulfilling at least one of the following objectives:
- O1- Providing a steel making slag-based binder or a mortar or concrete composition including said steel making slag-based binder, which is attractive substitute to compositions comprising mostly Ordinary Portland Cement (OPC).
- O2- Providing a steel making slag-based binder or a mortar or concrete composition including said steel making slag -based binder, which is environmentally friendly.
- O3- Providing a steel making slag-based binder or a mortar or concrete composition including said steel making slag-based binder, which is more acceptable than OPC-based compositions, with respect to the health and safety issues.
- O4- Providing a steel making slag based binder or a mortar or concrete composition including said steel making slag based binder, which gives rise to dry-mortars, dry and semi-dry precast concrete and wet mortars and concrete formulations with appropriate ability to be manufactured by several ways, like vibro-compaction, spraying, trowelling, casting, etc.
- O5- Providing a steel making slag-based binder or a mortar or concrete composition including said steel making slag-based binder, which gives rise to wet formulations with appropriate rheological properties, i.e stable rheology (good workability) during the usual setting time (e.g. from some minutes to several hours) required by the users of said wet formulation.
- O6- Providing a steel making slag-based binder or a mortar or concrete composition including said steel making slag-based binder, which gives rise to a hardened material with required mechanical properties, especially an acceptable early strength (for instance 24 hours).
- O7- Providing a steel making slag-based binder or a mortar or concrete composition including said steel making slag-based binder, which gives rise to a hardened material with required durability.
- O8- Providing a steel making slag-based binder or a mortar or concrete composition including said steel making based binder, which gives rise to a hardened material with the usually required setting time (e.g. from some minutes to several hours).
- O9- Providing a simple and cheap method of preparation of the steel making slag-based binder or the mortar or concrete composition including said steel making slag-based binder, which complies with at least one of the objectives -O1- to -O9-.
- O10- Providing a simple and cheap method of preparation of a wet form of the steel making slag-based binder or a mortar or concrete composition including said steel making slag-based binder.
- O11- Providing hardened products for the building industry including steel making slag as at least partial binder.

### Summary

It has been surprisingly found that hydraulic binder compositions comprising at least one steel making slag, at least another slag different from the steel making slag could have acceptable early strength, at 1 day, and acceptable mechanical strength at long term, typically at 28 days, if said hydraulic binder compositions comprise at least one co-binder, selected from clinker sources and lime sources, and at least one alkali activator, chosen among alkali mineral salts, of the reaction of at least one of said steel making slag, said another slag different from the steel making slag or said co-binder with water.

The above objectives are reached thanks to a hydraulic binder composition comprising:
A) a mixture of:
   A-1) between 20 dry wt% and 95 dry wt % of at least one steel making slag,
   A-2) between 4 dry wt % and 79 dry wt % of at least a slag different from A-1, and/or at least one pozzolanic material and/or at least one inert filler,
   A-3) between 1 dry wt % and 25 dry wt % of at least one co-binder, preferably a clinker source and/or a lime source different from A-1 and A-2,
B) between 0.01 dry wt % and 10 dry wt %, relative to the total dry weight of A, of at least one steel making slag accelerator,
C) between 0.1 dry wt% and 5 dry wt%, relative to the total dry weight of A, of at least one alkali activator for reacting A-1, A-2 and/or A-3 with water, C being different from B and chosen among alkali mineral salts and mixtures thereof,
D) between 0.1 dry wt% and 2 dry wt%, relative to the total dry weight of A, of at least one fluidification agent.

The invention also concerns a dry concrete composition or a dry industrial mortar composition, in particular tile adhesive, coating, assembling mortars, repair mortars, renders, technical mortars and mortars for floor covering comprising at least one aggregate and the hydraulic binder composition described above.

The invention further concerns a wet concrete composition or a wet industrial mortar composition, in particular tile adhesive, coating, assembling mortars, repair mortars, renders, technical mortars and mortars for floor covering comprising at least one aggregate, the hydraulic binder composition described above and water.

The invention is in addition directed to a hardened concrete composition or a hardened industrial mortar composition obtained from the wet concrete composition or the wet industrial mortar composition described above.

Moreover, the invention concerns a process for preparing the wet concrete composition or the wet industrial mortar composition as described above comprising a step of mixing with water, at least one aggregate and the hydraulic binder composition as described above the hydraulic binder composition being prepared before the mixing step or in situ during the mixing step from at least some of the different components of the binder composition taken separately and/or under the form of premix(es).

### Definitions

According to the terminology of this text, the following non limitative definitions have to be taken into consideration:

"alkali activator" are chemical compounds bearing either sodium, potassium or lithium cations, that increases pH value of an aqueous solution above their neutral state. A test for determining whether an alkali compounds is an alkali activator according to the invention, could be adding said alkali compound into a deionized water so as to obtain a concentration of said alkali compound of 1 mol.L⁻¹ at a temperature of 20°C, if the pH is increased to a value above at least 7.5, after complete dissolution of said alkali compound.

"slag" denotes a stony by-product matter separated from metals during the smelting or refining of ore.

"Steel making slag" within the present context is a by-product from the steel making process. Within the present context also iron slags, and especially furnace slags, are considered as steel making slags.

"GGBS" or "GGBFS": Ground Granulated Blast Furnace Slag, which is equivalent to blast furnace slag, Granulated Blast Furnace Slag (GBFS), blast furnace water-crushed slag powder and blast furnace slag fine aggregate.

"cement" is understood as meaning a powdery substance made for use in making mortar or concrete. It is a mineral binder, possibly free from any organic compound. It refers to any ordinary cement and it includes slag Portland blended and alkali-activated based cements.

"binder" refers to "hydraulic binder" meaning any material that hardens just by adding water, like GGBS and cement.

"mortar" refers to a material composed of binder(s), aggregates such as sand and other components, like admixtures.

"concrete" refers to a material composed of binder(s), aggregates such as sand and gravel and other components, like admixtures.

### Detailed description

The hydraulic binder composition according to the invention comprises:
A) a mixture of:
   A-1) between 20 dry wt% and 95 dry wt % of at least one steel making slag,
   A-2) between 4 dry wt % and 79 dry wt % of at least a slag different from A-1, and/or at least one pozzolanic material and/or at least one inert filler,
   A-3) between 1 dry wt % and 25 dry wt % of at least one co-binder, preferably a clinker source and/or a lime source different from A-1 and A-2,
B) between 0.01 dry wt % and 10 dry wt %, relative to the total dry weight of A, of at least one steel making slag accelerator,
C) between 0.1 dry wt% and 5 dry wt%, relative to the total dry weight of A, of at least one alkali activator for reacting A-1, A-2 and/or A-3 with water, C being different from B and chosen among alkali mineral salts and mixtures thereof,
D) between 0.1 dry wt% and 2 dry wt%, relative to the total dry weight of A, of at least one fluidification agent.

### The component A

Component A is a mixture of:
A-1) between 20 dry wt% and 95 dry wt % of steel making slag,
A-2) between 4 dry wt % and 79 dry wt % of at least a slag different from A-1, and/or at least one pozzolanic material and/or at least one inert filler, and
A-3) between 1 dry wt % and 25 dry wt % of at least one co-binder, preferably a clinker source and/or a lime source different from A-1 and A-2.

Component A represents the binder part of the hydraulic binder composition according to the invention. In other words, component A is the component of the hydraulic binder composition according to the invention that is able to react with water so as to set and harden.

### The component A1

Steel making slag is obtained for example in the Thomas process, the Linz-Donawitz process, the Siemens-Martin process or the electric arc furnace when iron is converted to steel. Steel making slag is generated when hot raw iron is treated with oxygen to remove carbon and other elements that have a higher affinity to oxygen than iron. Typically, fluxes and/or elements to fix impurities are added during the process, such as limestone or dolomite. Fluxes and fixing aids combine with silicates and oxides to form the liquid slag. Liquid slag is then separated from the crude steel and cooled in the pits or ground bays to form crystalline or partly crystalline steel making slag. The cooled slag may then be crushed, milled, and sieved to a desired fineness. Preferentially, steel making slag of the present invention is a type of slag which has not been additionally treated in the hot state or during the cooling process.

The particle size of a steel making slag can be analyzed by sieve analysis as described for example in standard ASTM C136/C136M. The process separates fine particles from more course particles by passing the material through a number of sieves of different mesh sizes. The material to be analyzed is vibrated through a series of sequentially decreasing sieves using a single, or combination of horizontal, vertical or rotational motion. As a result, the percentage of particles retained on a sieve of a given size is given.

Another measure for the fineness of a steel making slag is the Blaine surface. The Blaine surface can be determined according to NF EN 196-6. According to a preferred embodiment, the steel making slag has a Blaine surface of between 1000 - 8000 cm²/g, preferably 2000 - 6000 cm²/g, more preferably 3000 - 5000 cm²/g. This is because the accelerators will accelerate the reaction of steel making slag with water to such an extent that also coarser slag can be used. Coarser slag may have the advantage of better availability and lower cost as compared to fine slag. It is, however, also possible to use a steel making slag with a higher specific surface.

Preferably, in the hydraulic binder composition according to the invention, the steel making slag is selected in the group comprising basic oxygen furnace slag (BOF), Linz-Donawitz (LD) slag, Electric Arc Furnace (EAF) slag and mixtures thereof.

A very preferred type of steel making slag within the present context is basic oxygen furnace slag (BOF). According to embodiments, the steel making slag is a basic oxygen furnace slag. Another common name for basic oxygen furnace slag is basic oxygen slag (BOS). The chemical composition of a BOF slag can be determined by XRF as described in ASTM D5381-93. A typical BOF slag has a chemical composition with 27 - 60 wt.-% of CaO, 8 - 38 wt.-% of iron oxides, 7 - 25 wt.-% of SiO₂, 1 - 15 wt.-% of MgO, 1 - 8 wt.-% of Al₂O₃, 0.5 - 8 wt.-% of MnO, 0.05 - 5 wt.-% of P₂O₅, and some minor components, especially oxides of Ti, Na, K, and Cr, with < 1 wt.-%. The chemical composition of a BOF slag may vary depending on steel plant and depending on operation parameter of the basic oxygen furnace. Especially, preferred BOF slag has a chemical composition with 35 - 55 wt.-% of CaO, 10 - 30 wt.-% of iron oxides, 10 - 20 wt.-% of SiO₂, 2 - 10 wt.-% of MgO, 1 - 5 wt.-% of Al₂O₃, 0.5 - 5 wt.-% of MnO, 0.5 - 3 wt.-% of P₂O₅, and some minor components, especially oxides of Ti, Na, K, and Cr, with < 1 wt.-%.

A preferred steel making slag, especially a basic oxygen furnace slag, has a content of iron oxides expressed as Fe₂O₃ of 8 - 38 w%, preferably of 10 - 30 wt.-%, and a content of sulfur expressed as SO₃ of < 1 w%, preferably < 0.5 w%, especially < 0.1 w%, in each case relative to the total dry weight of the steel making slag.

It is especially preferred, that the steel making slag does not comprise Dicalciumsilicate (C₂S, belite) in an amount of more than 66 wt.-% relative to the total dry weight of the slag.

In certain embodiments, the hydraulic binder composition of the invention comprises between 25 dry wt% and 80 dry wt %, preferably between 35% dry wt% and 60 dry wt% of steel making slag.

### The component A-2

In certain embodiments, the hydraulic binder composition of the invention comprises between 10 dry wt% and 75 dry wt %, preferably between 35% dry wt% and 60 dry wt% of component A-2.

According to the invention, the component A-2 is composed of at least a slag different from A-1, and/or at least one pozzolanic material and/or at least one inert filler.

In embodiments, the slag different from A-1 is Ground Granulated Blast Furnace Slag (GGBS).

The proportion of the slag different from A-1, in the component A-2 is generally between 0 dry wt% and 100 dry wt% based on the total dry weight of component A-2, preferably between 10 dry wt% and 80 dry wt% and more preferably between 20 dry wt% and 70 dry wt%.

In embodiments, the pozzolanic material is selected in the group comprising natural pozzolans, pumice, silica fume, precipitated silica, fly ash, calcined schist, metakaolin, calcined illite, calcined bentonite, calcined montmorillonite, calcined smectite, biomass ash, rice husk ash, diatomaceous earth, ground opal, carbonated steel making slag, carbonated olivine, carbonated wollastonite, all carbonated silicate-bearing minerals, ground waste glass and mixtures thereof.

The proportion of the pozzolanic material, in the component A-2 is generally between 00 dry wt% and 100 dry wt% based on the total dry weight of component A-2, preferably between 10 dry wt% and 80 dry wt% and more preferably between 20 dry wt% and 70 dry wt%.

In embodiments, the inert filler is selected in the group comprising calcite powder, aragonite powder, vaterite powder, dolomite powder, precipitated calcium carbonate, quartz powder and mixtures thereof.

The proportion of the inert filler, in the component A-2 is generally between 00 dry wt% and 100 dry wt% based on the total weight of component A-2, preferably between 10 dry wt% and 80 dry wt% and more preferably between 20 dry wt% and 70 dry wt%.

### The component A-3

In certain embodiments, the hydraulic binder composition of the invention comprises between 2 dry wt% and 20 dry wt %, preferably between 5% dry wt% and 15 dry wt% of component A-3.

In a preferred embodiment, the clinker source is selected in the group comprising Ordinary Portland Cement (OPC), Portland clinker, Portland clinker containing cement and cement as defined in standards EN 197-1 and NF EN 197-5 and mixtures thereof.

In certain embodiments, the proportion of the clinker source is generally between 30 dry wt% and 100 dry wt% based on the total dry weight of component A-3, preferably between 40 dry wt% and 80 dry wt% and more preferably between 50 dry wt% and 70 dry wt%.

In a preferred embodiment, the lime source is selected in the group comprising quick lime, hydrated lime, natural hydraulic lime and mixtures thereof.

In certain embodiments, the proportion of the lime source is generally between 30 dry wt% and 100 dry wt% based on the total weight of component A-3, preferably between 40 dry wt% and 80 dry wt% and more preferably between 50 dry wt% and 70 dry wt%.

### The component B

According to the invention the hydraulic binder composition comprises at least one steel making slag accelerator, i.e. an accelerator of the reaction between the steel making slag and water.

When steelmaking slag reacts with water, a hydration reaction occurs and different mineral phases are being formed. Thereby, water and slag are consumed, hardening proceeds and strength is developed. A suitable method to measure the reaction of steel making slag with water therefore is the measurement of strength, especially compressive strength. A higher compressive strength corresponds to a higher reaction progress, i.e. more mineral phases being formed. An acceleration of the reaction of steel making slag with water can thus be determined by comparing the strength, especially the compressive strength, of different mixtures after a given time of reaction, for example after 1 day, after 7 days, and/or after 28 days. An accelerator for the reaction of steel making slag with water will lead to an increase in strength, especially in compressive strength, of the mixture comprising steel making slag, water, and the accelerator after a given point of time as compared to the strength, especially the compressive strength, of a mixture of steel making slag and water in the same ratio but without the accelerator added and measured after the same time. The time is always measured from the point of addition of water to the steel making slag. A suitable procedure for the measurement of compressive strength is described in EN 12190.

The accelerators for the reaction of steel making slag with water are selected from the group consisting of alkanolamines, reducing agents, sugars, sugar acids, carboxylic acids and their salts, amino acids and their salts, sulfamic acid, glyoxal, acetylacetone, pyrocatechol, nitrilotri(methylphosphonic acid), etidronic acid, mineral salts, or mixtures thereof.

One type of suitable accelerators are alkanolamines. Alkanolamines are preferably selected in the group comprising monoethanolamine, diethanolamine, triethanolamine (TEA), diethanolisopropanolamine (DEIPA), ethanoldiisopropanolamine (EDIPA), isopropanolamine, diisopropanolamine, triisopropanolamine (TIPA), N-methyldiisopropanolamine (MDIPA), N-methyldiethanolamine (MDEA), tetrahydroxyethylethylenediamine (THEED), and tetrahydroxyiso-propylethylenediamine (THIPD), as well as mixtures of two or more of these alkanolamines.

Preferred alkanolamines are triethanolamine (TEA), triisopropanolamine (TIPA), diethanolisopropanolamine (DEIPA), and ethanoldiisopropanolamine (EDIPA). Especially preferred alkanolamines are diethanolisopropanolamine (DEIPA), ethanoldiisopropanolamine (EDIPA), and triisopropanolamine (TIPA).

Another type of suitable accelerators are sugars. A "sugar" in the sense of the present invention is a carbohydrate having an aldehyde group. In particularly preferred embodiments, the sugar belongs to the group of monosaccharides or disaccharides. Examples of sugars include, but are not limited to, glyceraldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose, and xylobiose. Sugars can also be used in form of dextrines, vinasse, or molasse. Both, D and L-form of sugars are likewise preferred. Especially preferred sugars are fructose, mannose, maltose, glucose, galactose, dextrines, vinasse, and molasses.

Another type of suitable accelerators are sugar acids or their salts. A "sugar acid" in the context of the present invention is a monosaccharide having a carboxyl group. It may belong to any of the classes of aldonic acids, ursonic acids, uronic acids or aldaric acids. Preferably, it is an aldonic acid. Examples of sugar acids useful in connection with the present invention include, but are not limited to gluconic acid, ascorbic acid, neuraminic acid, glucuronic acid, galacturonic acid, iduronic acid, mucilic acid and saccharic acid. The sugar acid may be in the form of the free acid or as a salt. According to embodiments, salts of sugar acids may be salts with metals of groups la, IIa, Ib, IIb, IVb, Vlllb of the periodic table of elements. Preferred salts of sugar acids are salts of alkali metals, alkaline earth metals, iron, cobalt, copper or zinc. Especially preferred are salts with sodium, potassium, and calcium. Both, D-and L-form of sugar acids are likewise preferred. An especially preferred sugar acid is gluconic acid and its salts, especially sodium gluconate.

Another type of suitable accelerators are amino acids or their salts. Amino acids preferably are selected from the group consisting of glycine, lysine, glutamate, glutamic acid, aspartic acid, polyaspartic acid, methionine, nitrilotriacetic acid (NTA), iminodisuccinic acid, methylglycine-N,N-diacetic acid, and N,N-bis(carboxylatomethyl)glutamic acid, ethylenediamine disuccinic acid (EDDS), ethylenediamine tetraacetic acid (EDTA), hexamethylendiamine tatraacetic acid (HEDTA), diethylenetriamine pentaacetic acid (DTPA) or their salts. Especially preferred are salts of alkali metals or alkaline earth metals. In particular, salts are selected from the group consisting of tetratsodium N,N-bis(carboxylatomethyl)glutamate, trisodium methylglycine-N,N-diacetate, tetrasodium iminodisuccinate (IDS), trisodium ethylenediamine disuccinate, tetrasodium ethylenediamine tetraacetate, and tetrasodium hexamethylendiamine tetraacetate.

Another type of suitable accelerators are carboxylic acids or their salts. The term "carboxylic acid" means any organic molecule with a carboxylic acid or carboxylate group, except sugar acids as described above or amino acids as described above. Especially preferred carboxylic acids are formic acid, glycolic acid, citric acid, lactic acid, malic acid, tartaric acid, oxalic acid, malonic acid, succinic acid, glutaric acid, adipic acid, and salicylic acid. The carboxylic acid may be in the form of the free acid or in the form of a salt. According to embodiments, salts of carboxylic acids may be salts with metals of groups Ia, IIa, Ib, IIb, IVb, VIIIb of the periodic table of elements. Preferred salts of sugar acids are salts of alkali metals, alkaline earth metals, iron, cobalt, copper or zinc. Especially preferred are salts with sodium, potassium, and calcium. Preferred salts of carboxylic acids are calcium malonate, calcium succinate, calcium lactate, potassium citrate, and sodium citrate.

Another type of suitable accelerators are reducing agents. Within the present context reducing agents are materials with a reduction potential measured under standard conditions against a standard reference hydrogen half-cell of below 0.77 V. That is, suitable reducing agents have a half-cell potential lower than the couple Fe³⁺/Fe²⁺. Reducing agents are preferably selected from the group consisting of thiosulfates, thiocyanates, and sulfides, preferably from sodium thiosulfate or potassium sulfide. Reducing agents within the present context do not belong to any of the groups of alkanolamines, sugars, sugar acids, carboxylic acids and their salts, or amino acids and their salts as described above.

Other suitable accelerators are sulfamic acid, glyoxal, acetylacetone, pyrocatechol, nitrilotri(methylphosphonic acid), and etidronic acid.

In a preferred embodiment, the steel making slag accelerator is selected in the group comprising triethanolamine (TEA), triisopropanolamine (TIPA), diethanolisopropanolamine (DEIPA), ethanoldiisopropanolamine (EDIPA), fructose, mannose, maltose, glucose, galactose, dextrines, vinasse, molasses, gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, glycine, glutamic acid, aspartic acid, polyaspartic acid, tetrasodium iminodisuccinate (IDS), diethylenetriaminepentaacetic acid (DTMA), nitrilotriacetic acid (NTA), sulfamic acid, glyoxal, acetylacetone, pyrocatechol, nitrilotri(methylphosphonic acid), etidronic acid, calcium nitrite, calcium nitrate, calcium chloride, magnesium chloride, calcium sulfate, aluminum sulfate, aluminum chloride, thiosulfates, especially sodium thiosulfate, thiocyanates, sulfides, and mixtures thereof, preferably triisopropanolamine (TIPA).

According to particularly preferred embodiments, the accelerator is selected from the group consisting of diethanolisopropanolamine (DEIPA), ethanoldiisopropanolamine (EDIPA), lactic acid, calcium lactate, oxalic acid, malonic acid, succinic acid, adipic acid, malic acid, tartaric acid, citric acid, sodium citrate, potassium citrate, gluconic acid, sodium gluconate, glycine, sulfamic acid, glyoxal, acetylacetone, pyrocatechol, tetrasodium iminodisuccinate (IDS), nitrilotriacetic acid (NTA), and calcium sulfate.

According to further preferred embodiments, the accelerator is a mixture of two alkanolamines or of an alkanolamine with at least one further accelerator different from an alkanolamine.

According to especially preferred embodiments, the accelerator is a mixture of diethanolisopropanolamine (DEIPA) and triisopropanolamine (TIPA).

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and one further accelerator selected from the group consisting of fructose, mannose, maltose, glucose, galactose, dextrines, vinasse, molasses, gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, glycine, glutamic acid, aspartic acid, polyaspartic acid, tetrasodium iminodisuccinate (IDS), diethylenetriaminepentaacetic acid (DTMA), nitrilotriacetic acid (NTA), sulfamic acid, glyoxal, acetylacetone, pyrocatechol, nitrilotri(methylphosphonic acid), etidronic acid, calcium nitrite, calcium nitrate, calcium chloride, magnesium chloride, calcium sulfate, aluminium sulfate, aluminum chloride, thiosulfates, especially sodium thiosulfate, thiocyanates, and sulfides, especially potassium sulfide.

Preferred embodiments of an accelerator of the present invention are mixtures of TIPA and/or DEIPA with at least one of lactic acid, malic acid, tartaric acid, citric acid, sodium citrate, potassium citrate, malonic acid, succinic acid, adipic acid, glycine, sulfamic acid, or their salts, pyrocatechol, sugars, especially fructose, tetrasodium iminodisuccinate (IDS), calcium chloride, and calcium sulfate.

Especially preferred embodiments of an accelerator of the present invention are mixtures of TIPA and/or DEIPA with sugars, preferably fructose.

Further especially preferred embodiment of an accelerator of the present invention are mixtures of TIPA and/or DEIPA with citric acid or its salts, especially with citric acid, sodium citrate, potassium citrate, or calcium citrate.

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and two further accelerators, the first further accelerator being selected from sugars, especially fructose, mannose, maltose, glucose, or galactose, and the second further accelerator being selected from the group consisting of mineral salts and reducing agents, preferably from calcium chloride, magnesium chloride, calcium nitrite, calcium nitrate, aluminum sulfate, aluminum chloride, calcium sulfate, sodium thiosulfate and potassium sulfide.

Further especially preferred embodiments of an accelerator of the present invention are mixtures of TIPA and/or DEIPA with a sugar, preferably fructose, and with a carboxylic acid or its salts, preferably citric acid, sodium citrate, potassium citrate, or calcium citrate.

Further especially preferred embodiments of an accelerator of the present invention are mixtures of TIPA and/or DEIPA with a sugar, preferably fructose, and with aluminum sulfate or calcium nitrite.

Further especially preferred embodiments of an accelerator of the present invention are mixtures of TIPA and/or DEIPA with calcium sulfate or calcium nitrate.

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and two further accelerators the first further accelerator being selected from sugars, especially fructose, mannose, maltose, glucose, or galactose, and the second further accelerator being selected from the group consisting of sugar acids, carboxylic acids and sulfamic acid, especially gluconic acid, ascorbic acid, neuraminic acid, glucuronic acid, galacturonic acid, iduronic acid, mucilic acid, saccharic acid, salicylic acid and their sodium, potassium or calcium salts, formic acid, glycolic acid, citric acid, lactic acid, malic acid, tartaric acid, oxalic acid, malonic acid, succinic acid, glutaric acid, adipic acid, and their sodium, potassium or calcium salts.

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and three further accelerators the first further accelerator being selected from sugars, preferably fructose, mannose, maltose, glucose, or galactose, and the second further accelerator being selected from the group consisting of sugar acids, carboxylic acids and sulfamic acid, preferably gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, and the third further accelerator being selected from the group consisting of mineral salts and reducing agents, preferably from calcium chloride, magnesium chloride, calcium nitrite, calcium nitrate, aluminum sulfate, aluminum chloride, calcium sulfate, sodium thiosulfate and potassium sulfide.

According to embodiments, the accelerators of the present invention are used in a pure, undiluted form.

According to different embodiments, the accelerators of the present invention are used as an admixture or as part of an admixture. An admixture comprises or consists of the accelerator or the mixture of accelerators and optionally further ingredients. Such further ingredients can for example be a solvent, especially water, biocides, or pigments. Accelerators of the present invention may thus also be used in a dispersed or dissolved state, especially dispersed or dissolved in water.

Where the accelerator of the present invention is a mixture of two or more accelerators as described above or where an admixture is used, the accelerator or admixture can be present as a one-component, a two-component, or a multi-component composition. This means that the individual constituents forming the accelerator or admixture of the present invention can be present in an already mixed state within one receptable, forming a one-component composition. The accelerators can also be present in two or more spatially separated receptables forming a two-component or a multi-component composition. This might have benefits regarding the shelf life of the accelerator mixture. This might also facilitate mixing of the accelerators in variable ratios with the steelmaking slag and water. Where the accelerators of the present invention are present in a two-component or in a multi-component composition, they can be pre-mixed or be added individually at the same point of time or be added individually at different points of times.

According to embodiments, the accelerator B is added in a total amount of between 0.01 dry wt% and 10 dry wt%, relative to the total dry weight of component A. A total amount refers to the sum of dry wt% of all accelerators present.

According to preferred embodiments, alkanolamines are added in a total amount of between 0.005 dry wt% and 5 dry wt%, preferably 0.01 dry wt% and 3 w%, relative to the total dry weight of component A.

According to preferred embodiments, sugars are added in a total amount of between 0.005 dry wt% and 5 dry wt%,, preferably 0.01 dry wt% and 3 w% dry wt%, relative to the total dry weight of component A.

According to preferred embodiments, carboxylic acids are added in a total amount of between 0.005 dry wt% and 5 dry wt%, preferably 0.01 dry wt% and 3 dry wt%, relative to the total dry weight of component A.

According to preferred embodiments, amino acids are added in a total amount of between 0.005 dry wt% and 5 dry wt%, preferably 0.01 dry wt% and 3 dry wt%, relative to the total dry weight of component A.

According to preferred embodiments, reducing agents are added in a total amount of between 0.05 dry wt% and 10 dry wt%, preferably 0.1 dry wt% and 6 dry wt%, relative to the total dry weight of component A.

According to embodiments, any of sulfamic acid, glyoxal, acetylacetone, pyrocatechol, nitrilotri(methylphosphonic acid), and etidronic acid is added in an amount of between 0.05 dry wt% and 10 dry wt%, preferably 0.1 dry wt% and 6 dry wt%, relative to the total dry weight of component A.

Where a mixture of two or more accelerators B as described above is used, it is preferred that a weight ratio of (where present) any of
- alkanolamine to sugar,
- alkanolamine to carboxylic acid,
- alkanolamine to amino acid,
- sugar to amino acid,
- carboxylic acid to amino acid, or
- alkanolamine, sugar, carboxylic acid, and amino acid to any of sulfamic acid, glyoxal, acetylacetone, pyrocatechol, nitrilotri(methylphosphonic acid), and etidronic acid
is in the range of 1:50 to 50:1, preferably 1:20 to 20:1

Where a mixture of two or more accelerators B as described above is used, it is preferred that a weight ratio of (where present) any selection or combination of alkanolamine, sugar, carboxylic acid, amino acid, sulfamic acid, glyoxal, acetylacetone, pyrocatechol, nitrilotri(methylphosphonic acid), and etidronic to any selection or combination of mineral salt and reducing agent is within the range of 1:5000 to 1:1000, preferably 1:2500 to 1:1000.

### The component C

The hydraulic binder composition according to the invention comprises between 0.1 dry wt% and 5 dry wt%, relative to the total dry weight of A, of at least one alkali activator of the reaction of at least one of A-1, A-2 and A-3 with water, different from B) and chosen among alkali mineral salts and mixtures thereof.

In preferred embodiments, the alkali activator is selected in the group comprising Na₂SO₄, K2SO4, Li₂SO₄, Na₂CO₃, K2CO3, Li₂CO₃, NaNO₃, KNO₃, LiNO₃, NaNO₂, KNO₂, LiNO₂, Na₂SiO₄, K₂SiO₄, Li₂SiO₄, and mixtures thereof, preferably Na₂SO₄.

In particular embodiments, the hydraulic binder composition according to the invention comprises between 0.5 dry wt% and 4 dry wt%, relative to the total dry weight of A, of the alkali activator of the reaction of at least one of A-1, A-2 and A-3 with water, different from B), preferably between 1 dry wt% and 3 dry wt% and more preferably between 1.5 dry wt% and 2.5 dry wt%.

### The component D

The hydraulic binder composition according to the invention comprises between 0.1 dry wt% and 2 dry wt%, relative to the total dry weight of A, of at least one fluidification agent and chosen among alkali mineral salts and mixtures thereof.

In preferred embodiments, the fluidification agent is a superplasticizer selected in the group comprising lignosulfonate polymers, melamine sulfonate polymers, naphthalene sulfonate polymers, polycarboxylic acid ether polymers, polyoxyethylene phosphonates, vinyl copolymers, methallyl ether polycarboxylic acid ether, and mixtures thereof.

In particular embodiments, the hydraulic binder composition according to the invention comprises between 0.2 dry wt% and 1.8 dry wt%, relative to the total dry weight of A, of the fluidification agent preferably between 0.5 dry wt% and 1.5 dry wt% and more preferably between 0.8 dry wt% and 1.2 dry wt%.

### The dry concrete composition or dry industrial mortar composition

The invention also relates to dry concrete composition or dry industrial mortar composition, in particular tile adhesive, coating, assembling mortars, repair mortars, renders, technical mortars and mortars for floor covering comprising at least one aggregate and the hydraulic binder composition described above. The dry concrete or industrial mortar composition may eventually contain other admixtures and additions.

According to the invention, "dry" concrete composition or "dry" industrial mortar composition refers to composition that are in the form of powder and ready to be mixed with water. In other words, the dry concrete composition or dry industrial mortar composition of the invention may content some moisture, but it essentially contains solid components which are intended to be mixed with water before its application.

Aggregates comprise a large category of particulate material used in construction, including sands, gravels, crushed stones, slag (not-granulated), recycled concrete and geosynthetic aggregates. They serve as reinforcement to add strength to the overall composite material.

Advantageously, said dry industrial concrete or mortar composition can also include, apart from aggregates, one or several ingredients, especially functional admixtures, additions and fibres,. In particular, these ingredients are chosen among additives selected from the group comprising filler, supplementary cementitious material, water reducing polymers, latex, water retention agent, rheological agent, defoamer/antifoams, biocide, pigment, flame retardant, air-entraining agents and retarders like the following compounds:

### • Water retention agent.

A water retention agent has the property to keep the water of mixing before the setting. The water is so trapped in the wet formulation paste which improves its bond. To some extent, the water is less absorbed by the support.

The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

### • Rheological agent

The possible rheological agent (also named a "thickener") is preferably chosen in the group comprising, more preferably consisting in: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

### • Defoamer/Antifoams

The possible defoamer is preferably chosen in the group comprising, more preferably consisting in: polyether polyols and mixes thereof.

### • Biocide

The possible biocide is preferably chosen in the group comprising, more preferably consisting in: mineral oxides like zinc oxide and mixes thereof.

### • Pigment

The possible pigment is preferably chosen in the group comprising, more preferably consisting in: TiO₂, iron oxide and mixes thereof.

### • Flame retardant

Flame retardant (or flame proof agent) makes it possible to increase the fire resistance and/or to shrink the speed of flame spreading of the composition.

### • Air-entraining agents

Air-entraining agents (surfactants) are advantageously chosen in the group comprising, more preferably consisting in, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting in the sulfonate olefins, the sodium lauryl sulfate and their mixes.

### • Retarders

Retarders are advantageously chosen in the group comprising, more preferably consisting in tartric acid and its salts: sodium or potassium salts, citric acid and its salts: sodium (trisodic citrate) and their mixes.

In addition, other components may be:
- *Fibres*
- *Dispersion powders*
- *Wetting agents*
- *Polymeric resins*
- *Complexing agents*
- *Drying shrinkage reducing agents based on polyols.*

The total content of these optional other components in the dry mortar composition is preferably comprised between 0.01% and 10% by weight of the total weight of the binder composition, advantageously between 0.1% and 8%, and more advantageously between 0.5% and 5%.

### The wet concrete composition or wet industrial mortar composition

The invention also refers to a wet concrete composition or a wet industrial mortar composition in particular tile adhesive, coating, assembling mortars, repair mortars, renders, technical mortars and mortars for floor covering comprising at least one aggregate, the hydraulic binder composition described above and water.

In a specific embodiment, wet industrial mortar compositions are so called "Ready to use" mortars. "Ready to use" mortars are used for assembling bricks or blocks on building site. They are obtained by mixing all the elements of the composition (binder, aggregates and others components) with water directly at the mixing plant. They include a set retarding agent, allowing transport and delayed use up to several days, while maintaining its rheological and hardening properties.

### The process for preparing wet concrete composition or wet mortar composition

The invention also relates to a process for preparing the wet concrete composition or wet industrial mortar composition described above comprising a step of mixing with water at least one aggregate and the hydraulic binder composition described above, the hydraulic binder composition being prepared before the mixing step or in situ during the mixing step from at least some of the different components of the hydraulic binder composition taken separately and/or under the form of premix(es).

In other words, wet concrete composition or wet industrial mortar composition could be prepared by two distinct methods.

In a first method, the binder composition is prepared, and then mixed with the at least one aggregate. The dry concrete composition or dry mortar composition is thereafter mixed with water.

In a second method, the wet concrete composition or wet industrial mortar composition is prepared by mixing in water each component of the binder composition and the aggregates.

According to the present disclosure, the term "mixing" has to be understood as any form of mixing.

In a preferred embodiment a part of the binder composition and at least a part of the water are mixed together prior to the mixing with the aggregate.

In a preferred embodiment, the process is implemented with a ratio water to hydraulic binder is comprised between 0.1 and 0.6, advantageously between 0.15 and 0.45, and more advantageously between 0.2 and 0.4.

### Hardened concrete composition or hardened industrial mortar composition

The present invention also refers to hardened concrete composition or hardened industrial mortar composition obtained from the wet concrete composition or wet industrial mortar composition described above.

### Examples

### Example 1: the synergistic effect of the combination of the co-binder (component A-3) one alkali activator of the reaction of at least one of A-1, A-2 and A-3 with water, different from B) (component C).

Four dry hydraulic binder compositions, HB1, HB2, HB3 and HB4 have been prepared by mixing their components at dry state. HB1, HB2, HB3 and HB4 have then been individually mixed with water at a ratio dry hydraulic binder composition to water of 0.3 and with standard sand at a ratio dry hydraulic binder composition to standard sand of 0.43, in order to obtain four mortar compositions, MHB1, MHB2, MHB3 and MHB4 as reflected in table 1 below. The compressive strengths of the resulting compositions have been determined according to standard NF EN 196-1, the results are given in table 1 below.

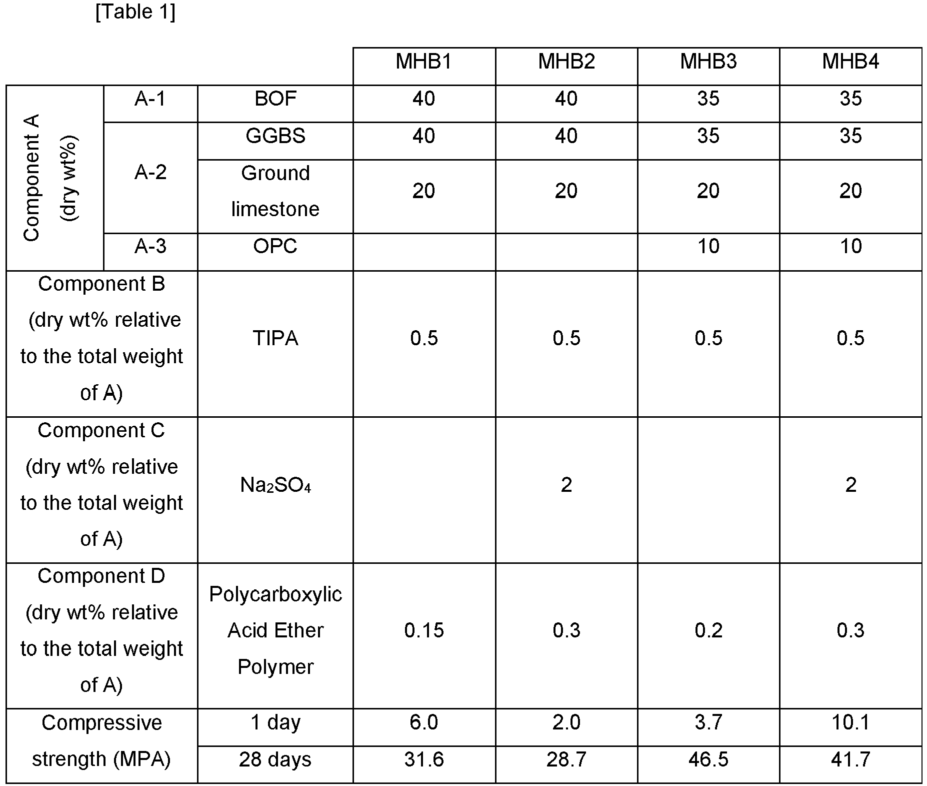

It can be seen from table 1, that individually, the presence of Na₂SO₄ (MHB2) or OPC (MHB3), decreases significantly the compressive strength at 1 day while the presence of both Na₂SO₄ and OPC (MHB4) significantly increases the compressive strength at 1 day. That shows an unexpected improvement of the compressive strength at 1 day of BOF containing mortars, thanks to a surprising synergistic technical effect of Na₂SO₄ and OPC.

### Example 2: Increasing the quantity of BOF (component A-1)

A further dry hydraulic binder composition, HB5, has been prepared by mixing its components at dry state. HB5 has then been mixed with water at a ratio dry hydraulic binder composition to water of 0.3 and with standard sand at a ratio dry hydraulic binder composition to standard sand of 0.43, in order to obtain a mortar composition, MHB5 as reflected in table 2 below. The compressive strengths of the resulting compositions have been determined according to standard NF EN 196-1, the results are given in table 2 below.

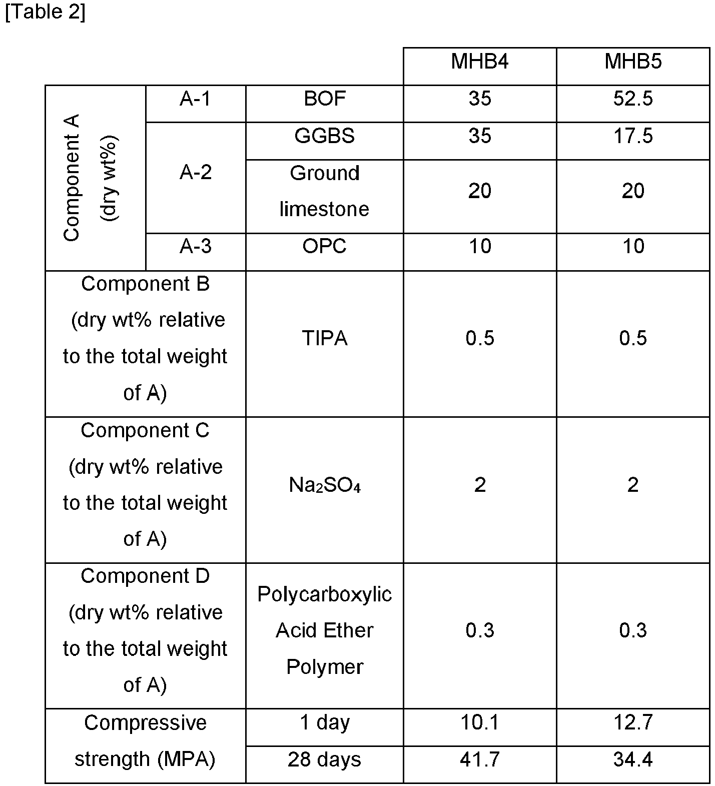

It can be seen from table 2 that the quantity of BOF can be increased in mortars according to the present invention.

### Example 3: decreasing the quantity of co-binder (component A-3)

A further dry hydraulic binder composition, HB6, has been prepared by mixing its components at dry state. HB6 has then been mixed with water at a ratio dry hydraulic binder composition to water of 0.3 and with standard sand at a ratio dry hydraulic binder composition to standard sand of 0.43, in order to obtain a mortar composition, MHB6 as reflected in table 3 below. The compressive strengths of the resulting compositions have been determined according to standard NF EN 196-1, the results are given in table 3 below.

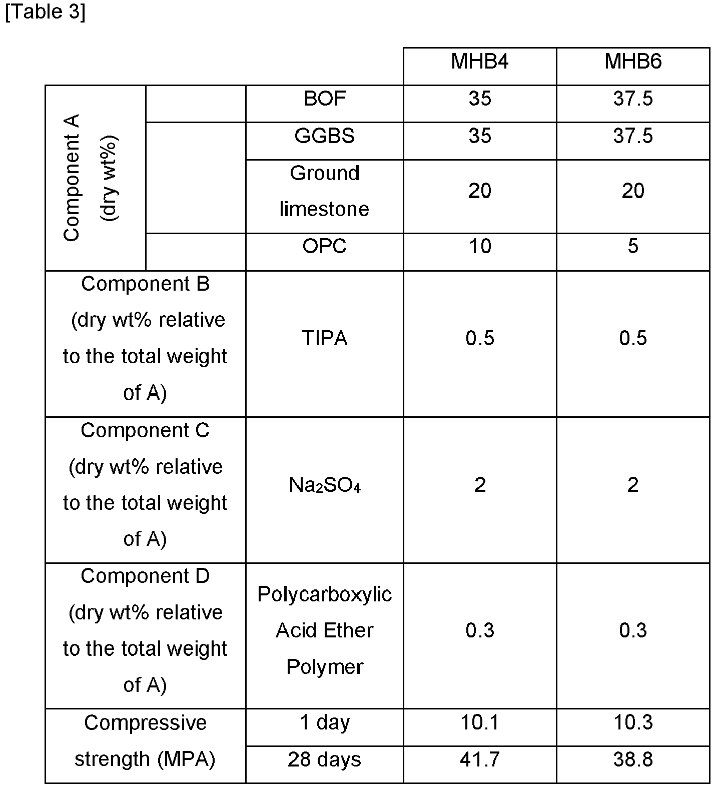

It can be seen from table 3 that the quantity of OPC could be decreased in favor of the presence of more BOF and GGBS.

### Example 4: varying the component A-2

Four further dry hydraulic binder compositions, HB7, HB8, HB9 and HB10 have been prepared by mixing their components at dry state. Each composition has then been individually mixed with water at a ratio dry hydraulic binder composition to water of 0.3 and with standard sand at a ratio dry hydraulic binder composition to standard sand of 0.43, in order to obtain two mortar compositions, MHB7, MHB8, MHB9 and MHB10 as reflected in table 4 below. The compressive strengths of the resulting compositions have been determined according to standard NF EN 196-1, the results are given in table 4 below.

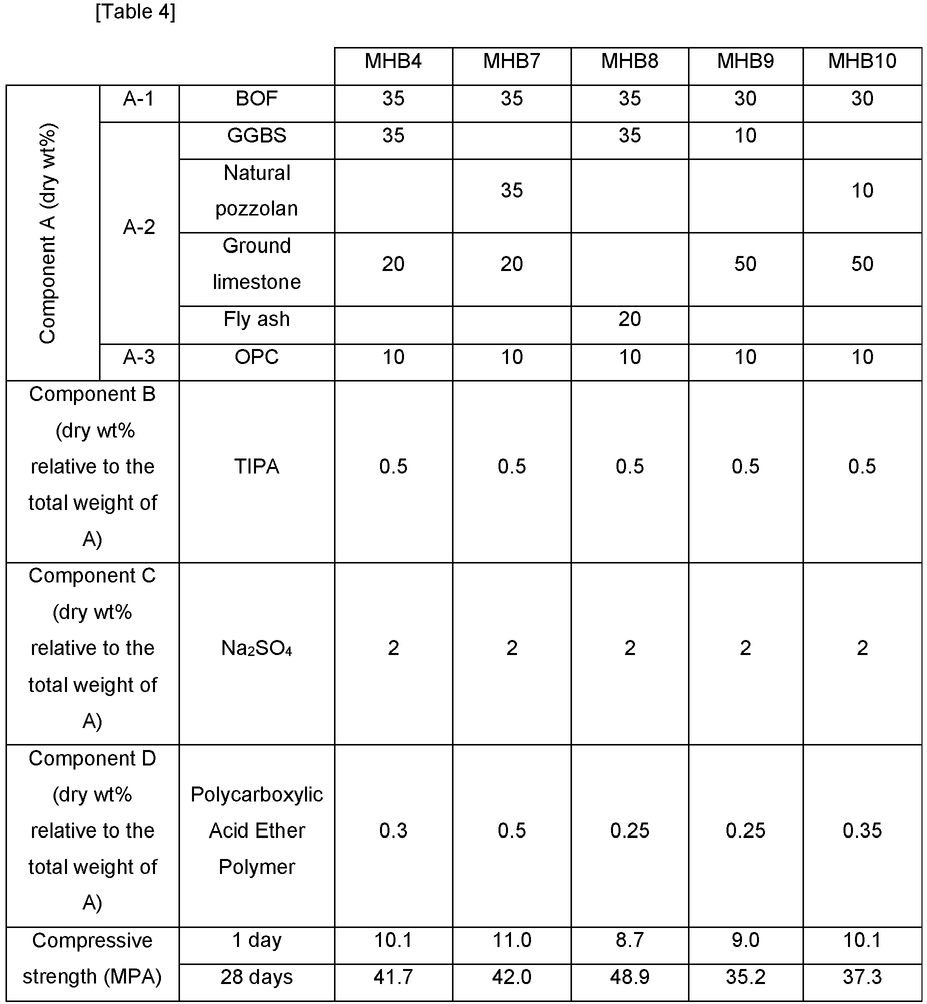

It can be seen from table 4 that natural pozzolan could be used instead of GGBS without significantly affect the compressive strengths at 1 day and at 28 days. It can also be seen that replacing ground limestone by fly ash increases the compressive strength at 28 days, but lightly decreases the compressive strength at 1 day, which remains acceptable. It can also be seen that increasing the ground filler content did not impact the 1 day compressive strength but slightly decreases the 28 days compressive strength, which remains acceptable.

## Claims

1. Hydraulic binder composition comprising:
A) a mixture of:
A-1) between 20 dry wt% and 95 dry wt % of at least one steel making slag,
A-2) between 4 dry wt % and 79 dry wt % of at least a slag different from A-1, and/or at least one pozzolanic material and/or at least one inert filler,
A-3) between 1 dry wt % and 25 dry wt % of at least one co-binder, preferably a clinker source and/or a lime source different from A-1 and A-2,
B) between 0.01 dry wt % and 10 dry wt %, relative to the total dry weight of A, of at least one steel making slag accelerator,
C) between 0.1 dry wt% and 5 dry wt%, relative to the total dry weight of A, of at least one alkali activator for reacting A-1, A-2 and/or A-3 with water, C being different from B and chosen among alkali mineral salts and mixtures thereof,
D) between 0.1 dry wt% and 2 dry wt%, relative to the total dry weight of A, of at least one fluidification agent.

2. Hydraulic binder composition according to claim 1, wherein the steel making slag is selected in the group comprising basic oxygen furnace slag (BOF), Linz-Donawitz (LD) slag, Electric Arc Furnace (EAF) slag and mixtures thereof.

3. Hydraulic binder composition according to any one of the preceding claims, wherein the slag different from A-1 is Ground Granulated Blast Furnace Slag (GGBS).

4. Hydraulic binder composition according to any one of the preceding claims, wherein the pozzolanic material is selected in the group comprising natural pozzolans, pumice, silica fume, precipitated silica, fly ash, calcined schist, metakaolin, calcined illite, calcined bentonite, calcined montmorillonite, calcined smectite, biomass ash, rice husk ash, diatomaceous earth, ground opal, carbonated steel making slag, carbonated olivine, carbonated wollastonite, all carbonated silicate-bearing minerals, ground waste glass and mixtures thereof.

5. Hydraulic binder composition according to any one of the preceding claims, wherein the inert filler is selected in the group comprising calcite powder, aragonite powder, vaterite powder, dolomite powder, precipitated calcium carbonate, quartz powder and mixtures thereof.

6. Hydraulic binder composition according to any one of the preceding claims, wherein the clinker source is selected in the group comprising Ordinary Portland Cement (OPC), Portland clinker, Portland clinker containing cement and cement as defined in standards EN 197-1 and NF EN 197-5 and mixtures thereof.

7. Hydraulic binder composition according to any one of the preceding claims, wherein the lime source is selected in the group comprising quick lime, hydrated lime, natural hydraulic lime and mixtures thereof.

8. Hydraulic binder composition according to any one of the preceding claims, wherein the steel making slag accelerator is selected in the group comprising triethanolamine (TEA), triisopropanolamine (TIPA), diethanolisopropanolamine (DEIPA), ethanoldiisopropanolamine (EDIPA), fructose, mannose, maltose, glucose, galactose, dextrines, vinasse, molasses, gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, glycine, glutamic acid, aspartic acid, polyaspartic acid, tetrasodium iminodisuccinate (IDS), diethylenetriaminepentaacetic acid (DTMA), nitrilotriacetic acid (NTA), sulfamic acid, glyoxal, acetylacetone, pyrocatechol, nitrilotri(methylphosphonic acid), etidronic acid, calcium nitrite, calcium nitrate, calcium chloride, magnesium chloride, calcium sulfate, aluminum sulfate, aluminum chloride,_thiosulfates, especially sodium thiosulfate, thiocyanates, sulfides, and mixtures thereof, preferably triisopropanolamine (TIPA).

9. Hydraulic binder composition according to any one of the preceding claims, wherein the alkali activator is selected in the group comprising Na₂SO₄, K2SO4, Li₂SO₄, Na₂CO₃, K2CO3, Li₂CO₃, NaNO₃, KNO₃, LiNO₃, NaNO₂, KNO₂, LiNO₂, Na₂SiO₄, K₂SiO₄, Li₂SiO₄, and mixtures thereof, preferably Na₂SO₄.

10. Hydraulic binder composition according to any one of the preceding claims, wherein the fluidification agent is a superplasticizer selected in the group comprising lignosulfonate polymers, melamine sulfonate polymers, naphthalene sulfonate polymers, polycarboxylic acid ether polymers, polyoxyethylene phosphonates, vinyl copolymers, methallyl ether polycarboxylic acid ether, and mixtures thereof.

11. Dry concrete composition or dry industrial mortar composition, in particular tile adhesive, coating, assembling mortars, repair mortars, renders, technical mortars and mortars for floor covering comprising at least one aggregate and the hydraulic binder composition according to any one of claims 1 to 10.

12. Wet concrete composition or wet industrial mortar composition in particular tile adhesive, coating, assembling mortars, repair mortars, renders, technical mortars and mortars for floor covering comprising at least one aggregate, the hydraulic binder composition according to any one of claims 1 to 10 and water.

13. Hardened concrete composition or hardened industrial mortar composition obtained from the wet concrete composition or the wet industrial mortar composition according to claim 12.

14. Process for preparing the wet concrete composition or the wet industrial mortar composition according to claim 12 comprising a step of mixing with water, at least one aggregate and the hydraulic binder composition according to any one of claims 1 to 10, the hydraulic binder composition being prepared before the mixing step or in situ during the mixing step from at least some of the different components of the binder composition taken separately and/or under the form of premix(es).

15. Process according to claim 14, wherein the ratio water to hydraulic binder composition is comprised between 0.1 and 0.6, advantageously between 0.15 and 0.45, and more advantageously between 0.2 and 0.4.
